## Europäisches Patentamt

## European Patent Office

## Office européen des brevets

(11) Veröffentlichungsnummer: **0 150 269**
**B1**

(12) # EUROPÄISCHE PATENTSCHRIFT

(45) Veröffentlichungstag der Patentschrift:
**13.01.88**

(51) Int. Cl.⁴: **G 02 F 1/133**

(21) Anmeldenummer: **84112348.2**

(22) Anmeldetag: **13.10.84**

(54) Anzeigevorrichtung, insbesondere Flüssigkristallanzeige sowie Verfahren zu ihrer Herstellung.

(30) Priorität: **09.01.84 DE 3400429**

(43) Veröffentlichungstag der Anmeldung:
**07.08.85 Patentblatt 85/32**

(45) Bekanntmachung des Hinweises auf die Patenterteilung:
**13.01.88 Patentblatt 88/2**

(84) Benannte Vertragsstaaten:
**DE FR GB NL SE**

(56) Entgegenhaltungen:
**DE-A-2 242 389**
**DE-A-2 635 942**
**DE-A-2 854 175**
**DE-A-3 339 011**
**DE-B-2 159 165**

(73) Patentinhaber: **VDO Adolf Schindling AG,**
**Gräfstrasse 103, D-6000 Frankfurt/Main (DE)**

(72) Erfinder: **Baeger, Holm, Dr. Dipl.- Phys.,**
**Salzbornstrasse 1, D-6231 Schwalbach (DE)**

(74) Vertreter: **Könekamp, Herbert, Dipl.- Ing., Sodener**
**Strasse 9, D-6231 Schwalbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Herstellen einer Anzeigevorrichtung, insbesondere Flüssigkristallanzeige, bei der zwischen zwei zueinander parallelen Trägerplatten ein in zwei optisch verschiedene Zustände schaltbares Medium eingeschlossen wird und bei dem die Trägerplatten durch einen äußeren Distanzierungsrahmen sowie eine Vielzahl von Distanzierungselementen zwischen den Trägerplatten miteinander verklebt werden, wobei die Distanzierungselemente im Sichtfeld gleichmäßig zwischen den Trägerplatten verteilt werden und eine solche Größe und Beschaffenheit aufweisen, daß sie für das Auge unsichtbar sind und wobei die Distanzierungselemente Festkörper sind, welche vor dem Einbringen zwischen die Trägerplatten mit einem Klebstoff beschichtet sind.

Bei großflächigen und/oder dünnwandigen Flüssigkristallanzeigen hängen wichtige Kenndaten wie das Schaltverhalten oder die Schwellspannung empfindlich von der Dicke der Flüssigkristallschicht zwischen den Trägerplatten ab. Derzeit baut man bereits Flüssigkristallanzeigen, bei denen der Abstand zwischen den Trägerplatten weniger als 10 µm beträgt. Um derartig hohe Anforderungen an den exakten Abstand der Trägerplatten zu erfüllen, genügt es nicht, die Trägerplatten ausschließlich am Distanzierungsrahmen miteinander zu verkleben, vielmehr ist es erforderlich, auch innerhalb des Sichtbereiches Distanzierungselemente anzuordnen.

Aus der DE-A-26 35 942 ist eine Anzeigevorrichtung bekannt, die nach dem eingangs genannten Verfahren hergestellt wurde.

Aus der DE-A-22 42 389 ist eine Flüssigkristallanzeige bekannt, bei der auf einer der Trägerplatten Distanzierungselemente aufgebracht sind, die mit dieser Trägerplatte verschmolzen werden. Anschließend werden die beiden Trägerplatten miteinander verbunden, so daß die Distanzierungselemente die beiden Trägerplatten in ganz bestimmtem Abstand zueinander halten.

Aufgabe der Erfindung ist es, ein Verfahren zur Herstellung einer Anzeigevorrichtung zu schaffen, bei der unabhängig von der Anordnung von Festzeichen ein Aufbauchen der Trägerplatten wirksam vermieden wird.

Diese Aufgabe wird erfindungsgemäß durch die Verwendung von Distanzierungselementen gelöst, die eine außenseitig auf die Klebstoffschicht aufgebrachte Verkapselungsschicht besitzen, welche sich unter Druck und Temperatur beim Verkleben der Trägerplatten zersetzt.

Eine andere Lösungsmöglichkeit besteht in der Verwendung von Distanzierungselementen, die mit zwei durch eine solche Sperrschicht voneinander getrennten Komponenten eines Zweikomponentenklebers beschichtet sind, daß sich die Sperrschicht unter Druck und Temperatur beim Verkleben der Trägerplatten zersetzt. Die Verkapselungsschicht der ersten Lösungsmöglichkeit sorgt dafür, daß trotz der flüssigen Klebstoffschicht, welche beispielsweise Polyurethan sein kann, ein trockenes, rieselfähiges Produkt entsteht, was bei der Einbringung der Distanzierungselemente zwischen die Trägerplatten wichtig ist.

Den Vorteil der Rieselfähigkeit der Distanzierungselemente besitzt auch die zweite Lösungsmöglichkeit, die darüber hinaus noch den Vorteil einer besonders guten Klebewirkung von Zweikomponentenklebern besitzt.

Als Distanzierungselemente können Glasfasern verwendet werden, die nach dem Faserziehen in einer Kleberzubereitung getränkt, anschließend getrocknet und danach auf die richtige Länge abgelänkt werden. Eine Alternative dazu besteht darin, die Distanzierungslemente in Form von Kugeln oder Glasfaserabschnitten in einer Klebstofflösung einzugeben und danach durch Versprühen zu vereinzeln.

Je nach verwendeter Kleberzubereitung kann es zweckmäßig sein, die Distanzierungselemente durch Verwirbeln in einem Luftstrom zu trocknen.

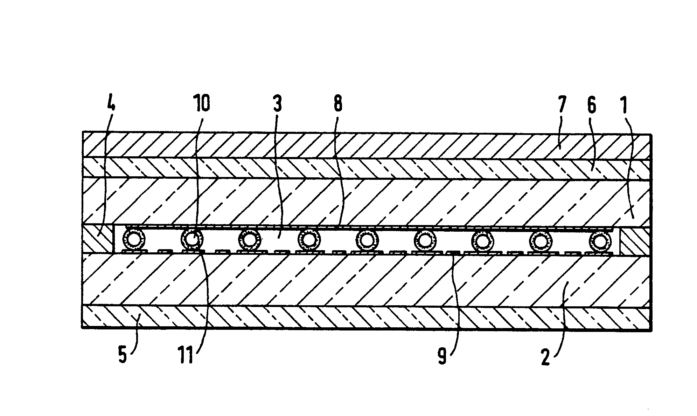

Die Erfindung läßt verschiedene Ausführungsmöglichkeiten zu. Zur Verdeutlichung ihres Grundprinzipes ist eine Flüssigkristallzelle im Schnitt dargestellt. Die Zeichnung ist der Übersicht halber schematisiert; für ein Verständnis der Erfindung nicht unbedingt erforderliche Einzelteile, wie beispielsweise die elektrischen Zuleitungen, sind nicht eingezeichnet.

Die dargestellte Flüssigkristallanzeige hat zwischen zwei Trägerplatten 1, 2 eingeschlossen ein zwischen zwei verschiedene optische Zustände schaltbares Medium 3. Die Trägerplatten 1, 2 sind außenseitig durch einen Distanzierungsrahmen 4 auf einem genauen Abstand gehalten. Außenseitig auf den Trägerplatten 1, 2 ist ein vorderer Polarisator 5 und ein rückwärtiger Polarisator 6 angebracht. Hinter dem rückwärtigen Polarisator 6 befindet sich ein Reflektor 7. Das elektrische Feld wird in dem Medium mittels Elektroden 8, 9 erzeugt. Die Elektrode 9 besteht aus einzelnen Segmenten.

Für die Erfindung wesentlich ist, daß innerhalb des Distanzierungsrahmens 4 im Sichtfeld der Flüssigkristallanzeige Distanzierungselemente, wie beispielsweise das Distanzierungselement 10 gleichmäßig verteilt angeordnet sind. Alle Distanzierungslemente 10 sind so klein und von einer solchen Beschaffenheit, daß sie für das Auge nicht wahrnehmbar sind und deshalb die Anzeige nicht stören. Die Distanzierungselemente 10 weisen eine Klebstoffschicht 11 auf, durch die sie mit den Trägerplatten 1, 2 verklebt sind. Diese Verklebung erfolgt gleichzeitig mit dem Verkleben des Distanzierungsrahmens 4.

Bei der Herstellung der erfindungsgemäßen Flüssigkristallanzeige wird auf einer Trägerplatte 2 der Distanzierungsrahmen 4 aufgesetzt. Anschließend werden die Distanzierungselemente 10 gleichmäßig verteilt eingebracht. Danach ist die andere Trägerplatte 1 aufzusetzen. Unter Druck und Temperatur kommt es zu einem Verkleben des Distanzierungsrahmens 4 und aller Distanzierungselemente 10 mit beiden Trägerplatten 1, 2.

## Patentansprüche

1. Verfahren zum Herstellen einer Anzeigevorrichtung, insbesondere Flüssigkristallanzeige, bei der zwischen zwei zueinander parallelen Trägerplatten (1, 2) ein in zwei optisch verschiedene Zustände schaltbares Medium eingeschlossen wird und bei dem die Trägerplatten durch eine äußeren Distanzierungsrahmen sowie eine Vielzahl von Distanzierungselementen (10) zwischen den Trägerplatten (1, 2) miteinander verklebt werden, wobei die Distanzierungselemente (10) im Sichtfeld gleichmäßig zwischen den Trägerplatten (1, 2) verteilt werden und eine solche Größe und Beschaffenheit aufweisen, daß sie für das Auge unsichtbar sind und wobei die Distanzierungselemente (10) Festkörper sind, welche vor dem Einbringen zwischen die Trägerplatten (1, 2) mit einem Klebstoff beschichtet werden, gekennzeichnet durch die Verwendung von Distanzierungselementen (10), die eine außenseitig auf die Klebstoffschicht (11) aufgebrachte Verkapselungsschicht besitzen, welche sich unter Druck und Temperatur beim Verkleben der Trägerplatten (1, 2) zersetzt.

2. Verfahren zum Herstellen einer Anzeigevorrichtung, insbesondere Flüssigkristallanzeige, bei der zwischen zwei zueinander parallelen Trägerplatten (1, 2) ein in zwei optisch verschiedene Zustände schaltbares Medium eingeschlossen wird und bei dem die Trägerplatten (1, 2) durch einen äußeren Distanzierungsrahmen (4) sowie eine Vielzahl von Distanzierungselementen (10) zwischen den Trägerplatten (1, 2) miteinander verklebt werden, wobei die Distanzierungselemente (10) im Sichtfeld gleichmäßig zwischen den Trägerplatten (1, 2) verteilt werden und eine solche Größe und Beschaffenheit aufweisen, daß sie für das Auge unsichtbar sind und wobei die Distanzierungselemente (10) Festkörper sind, welche vor dem Einbringen zwischen die Trägerplatten (1, 2) mit einem Klebstoff beschichtet werden, gekennzeichnet durch die Verwendung von Distanzierungselementen (10), die mit zwei durch eine solche Sperrschicht voneinander getrennten Komponenten eines Zweikomponentenklebers beschichtet sind, daß sich die Sperrschicht unter Druck und Temperatur beim Verkleben der Trägerplatten (1, 2) zersetzt.

## Claims

1. Method of manufacturing an indicating device, more particularlg indicating by liquid crystals, wherein there is enclosed between two carrier plates (1, 2) parallel to one another a medium which can be swisched into two optically different states and wherein the carrier plates are adhesively bonded together by an external spacing frame and a plurality of spacing elements (10) between the carrier plates (1, 2), the spacing elements (10) being disposed at equal distances apart between the carrier plates (1, 2) in the field of vison and being of such size and nature that they are imperceptible to the eye, while the spacing elements (10) are solid-state bodies which are coated with an adhesive before being introduced between the carrier plates (1, 2), characterised by the use of spacing elements (10) which have an encapsulating coating externally applied to the adhesive coating (11), which encapsulating coating decomposes under pressure and temperuture in the adhesive bonding of the carrier plates (1, 2).

2. Method of manufacturing an indicating device, more particularly indicating by liquid crystals, wherein there is enclosed between two carrier plates (1, 2) parallel to one another a medium which can be switched into two optically different states and wherein the carrier plates (1, 2) are adhesively bonded together by an external spacing frame (4) and a plurality of spacing elements (10) between the carrier plates (1, 2), the spacing elements (10) being disposed at equal distances apart between the carrier plates (1, 2) in the field of vision and being of such size and nature that they are imperceptible to the eye, while the spacing elements (10) are solid-state bodies which are coated with an adhesive before being introduced between the carrier plates (1, 2), characterised by the use of spacing elements which are coated with two components of a two-component adhesive which are separated from one another by a barrier layer which is such that it decomposes under pressure and temperature in the adhesive bonding of the carrier plates (1, 2).

## Revendications

1. Procédé pour fabriquer un dispositif d'affichage, en particulier un affichage à cristaux liquides, dans lequel un milieu, commutable entre deux états optiquement différents, est intercalé entre deux plaque, support (1, 2) mutuellement parallèle, et dans lequel les plaques support sont collées l'une à l'autre par un cadre externe formant entretoise ainsi que par un grand nombre d'éléments (10) formant entretoises et disposés entre les plaques (1, 2), selon lequel les éléments (10) sont uniformément répartis dans le champ de vision entre les plaques support (1, 2) et ont une grandeur et une structure telles qu'elles sont

invisibles à l'oeil, les éléments (10) formant entretoises étant des solides enduits d'une colle avant leur introduction entre les plaques support (1, 2), procédé caractérisé en ce qu'on utilise des éléments (10) formant entretoise, et qui possèdent une couche d'encapsulage appliquée extérieurement sur la couche de colle (11) et qui, sous l'influence de la pression et de la température, se décompose lors du collage des plaques support (1, 2).

2. Procédé pour fabriquer un dispositif d'affichage, en particulier un affichage à cristaux liquides, dans lequel un milieu, commutable entre deux états optiquement différents, est intercalé entre deux plaques support (1, 2) mutuellement parallèles et dans lequel les plaques support (1, 2) sont réunies l'une à l'autre par collage à l'aide d'un cadre (4) externe formant entretoise ainsi que à l'aide d'un grande nombre d'éléments (10) formant entretoise, entre les plaques support (1, 2), les éléments (10) étant répartis uniformément dans le champ de vision entre les plaques support (1, 2) et ayant une grandeur et une structure telles qu'ils sont invisibles à l'oeil et les elements (10) étant des solides qui, avant leur introduction entre les plaques support (1, 2) sont enduits d'une colle, procédé caractérisé en ce qu'on utilise des eléments (10) formant entretoises et qui sont enduits de deux composants d'une colle à deux composants, séparés l'un de l'autre par une couche de blocage telle que cette couche se décompose sous l'effet de la pression et de la témperature lors de l'assemblage par collage des plaques support (1, 2).